# EUROPEAN PATENT APPLICATION

(11) **EP 4 579 308 A1**
(43) Date of publication of application: **02.07.2025**
(21) Application number: 23856610.3
(22) Date of filing: 22.08.2023
(51) Int. Cl.: G02B 21/36

(54) **DUAL-CAMERA SWITCHING APPARATUS, SWITCHING METHOD AND MICROSCOPE SYSTEM**

(30) Priority: 26.08.2022 CN 202211033838
(71) Applicant: Leica Microsystems CMS GmbH, 35578 Wetzlar (DE)
(72) Inventor: WANG, Fei, Suzhou, Jiangsu 215024 (CN); QIAN, Renda, Suzhou, Jiangsu 215024 (CN); GAO, Yiteng, Suzhou, Jiangsu 215024 (CN)
(74) Representative: 2SPL Patentanwälte PartG mbB
(86) International application number: PCT/CN2023/114211
(87) International publication number: WO 2024/041520

(57) **Abstract**

The present invention discloses a dual camera switching device, a switching method and a microscope system. The switching device comprises a mounting plate, a camera module, a moving module and an optical path switching module; the camera module comprises a color camera and monochrome camera arranged on the mounting plate, and the moving module comprises a moving platform and a driving mechanism configured to drive the moving platform; the optical path switching module is arranged on the moving platform; the driving mechanism drives the moving platform to move to a first position or a second position, the light reflecting portion of the optical path switching module is configured to reflect input light to the color camera at the first position, and reflects input light to the monochrome camera at the second position. The present invention enables the microscope to have both high-quality brightfield imaging and fluorescence imaging functions, and the switching speed of the dual cameras is controllable, stable and smooth, so that the optical imaging is always clear.

## Description

### Technical field

The present application relates to microscope imaging systems, in particular it relates to a dual camera switching device, switching method and microscope system.

### Background

Microscope imaging technology has broad and important applications in industry and life-sciences. The majority of microscopes used in life-sciences research require either brightfield imaging or fluorescence imaging. Brightfield imaging is an important means of visualization research; fluorescence imaging is an important tool for observing the distribution of specific molecules and performing real-time dynamic imaging on living cells or tissues.

In the prior art, good fluorescence imaging can be achieved by a black and white camera, but color brightfield imaging cannot be simultaneously achieved. Or, in order to obtain high-quality color brightfield imaging, a color camera is used, but the fluorescence imaging function will be sacrificed, resulting in reduced signal reception efficiency of the fluorescence imaging and reduced performance.

### Summary

The purpose of the present invention is to provide a dual camera switching device, a switching method and a microscope system that can reliably switch between two different cameras to meet the differing imaging requirements of a microscope.

To achieve the above object, the technical solution adopted by the present invention is as follows:
A dual camera switching device for a microscope, comprising a mounting plate, a camera module, a moving module and an optical path switching module; wherein the camera module comprises a first camera and a second camera arranged on the mounting plate, and the first camera and the second camera are cameras of different types;
The moving module is arranged on the mounting plate, and the moving module comprises a moving platform and a driving mechanism configured to drive the moving platform;
The optical path switching module is arranged on the moving platform, and the optical path switching module comprises a light reflecting portion;
The driving mechanism is configured to drive the moving platform to move to a first position or a second position, wherein the light reflecting portion of the optical path switching module is configured to reflect input light to the first camera at the first position, and is configured to reflect input light to the second camera at the second position.

Further, the light reflecting portion of the optical path switching module comprises a first light reflector and a second light reflector;
The driving mechanism is configured to drive the moving platform to move, so as to drive the first light reflector and the second light reflector to slide relative to the mounting plate;
The first light reflector is configured to reflect the input light from the first position to the first camera; the second light reflector is configured to reflect the input light from the second position to the second camera;
Further, based on any one of the above-mentioned technical solutions or a combination of multiple technical solutions, the reflective surface of the first light reflector forms an angle with the reflective surface of the second light reflector; the lens of the first camera forms an angle with the lens of the second camera, and the first camera and the second camera are relatively fixed to the mounting plate; and/or,
The first light reflector and the second light reflector are arranged abreast, and the first camera and the second camera are arranged abreast; the first light reflector and the first camera are arranged opposite to each other and are driven synchronously, and the second light reflector and the second camera are arranged opposite to each other and are driven synchronously.

Further, based on any one of the technical solutions or a combination of multiple technical solutions mentioned above, the driving mechanism is connected to the moving platform via a connecting member, and the extending length of the connecting member on the surface of the moving platform is greater than one third or one half of the width of the moving platform.

Further, based on any one of the above technical solutions or a combination of multiple technical solutions, the driving mechanism comprises a motor and a drive controller, and the switching device further comprises a position detection device electrically connected to the drive controller, configured to detect a signal that the moving platform slides to a position close to the first position or the second position, and sends the detected signal to the drive controller;

The drive controller controls the motor on the basis of the signal detected by the position detection device, so that the motor drives the moving platform to reach an initialization position.

Further, based on any one of the above-mentioned technical solutions or a combination of multiple technical solutions, the driving mechanism comprises a motor and a drive controller, wherein, the motor is a stepping motor or a servo motor, and the drive controller is configured to send variable frequency pulses to the motor, wherein, when the moving platform approaches a preset range from the first position or the second position, the frequency of the pulses sent by the drive controller to the motor is reduced; or,
The motor is a DC motor, and the switching device further comprises two sensors respectively close to the first position and the second position, being configured to detect signals from the moving platform sliding close to the first position or the second position, and sending the detected signals to the drive controller; the drive controller triggers the DC motor to decelerate when the moving platform approaches the first position or the second position on the basis of the signals detected by the sensors.

Further, based on any one of the above-mentioned technical solutions or a combination of multiple technical solutions, the light reflecting portion of the optical path switching module comprises a light reflector;
The driving mechanism is configured to drive the moving platform to rotate around a fixed axis, so as to drive the light reflector to rotate relative to the mounting plate.

Further, based on any one of the technical solutions or a combination of multiple technical solutions described above, each light reflector is installed on the moving platform via three or more adjustment parts, and the adjustment parts cooperate with each other to enable the light reflector to have a maximum of six degrees of freedom for adjustment relative to the input light, so that the light reflected to the corresponding camera is parallel to the optical axis of the lens.

Furthermore, based on any one of the technical solutions or a combination of multiple technical solutions mentioned above, the mounting plate further comprises a supporting platform, the supporting platform has a certain height relative to the surface of other areas of the mounting plate, the moving platform is arranged on the supporting platform, and the light reflecting portion of the optical path switching module is suspended on the side of the supporting platform close to the camera module.

Furthermore, based on any one of the technical solutions or a combination of multiple technical solutions mentioned above, the mounting plate is further provided with a first positioning member located at the first position and a second positioning member located at the second position, and the moving platform is limited to moving between the first positioning member and the second positioning member.

Further, based on any one of the above-mentioned technical solutions or a combination of multiple technical solutions, the first positioning member comprises a first positioning block and a first bolt arranged on the first positioning block, and the second positioning member comprises a second positioning block and a second bolt arranged on the second positioning block;
the end faces of the first bolt and the second bolt are arranged opposite to each other, and the end face of the first bolt defines the first position, and the end face of the second bolt defines the second position.

Further, based on any one of the above-mentioned technical solutions or a combination of multiple technical solutions, the mounting plate is provided with a light through hole in the area corresponding to the light reflecting portion of the optical path switching module;

The reflecting surfaces of the light reflecting parts all face the light through hole.

Further, based on any one of the above-mentioned technical solutions or a combination of multiple technical solutions, the first camera is a color camera, the second camera is a monochrome camera.

According to another aspect of the present invention, a microscope system is provided, comprising a microscope and the dual camera switching device described above.

According to another aspect of the present invention, a switching method based on the dual camera switching device described above is provided, comprising the following steps:
determining one of the first camera or the second camera as a target imaging camera;
driving the moving platform to the first position or second position according to the determined target imaging camera,;
adjusting the adjustment part on the light reflector of the device until the light reflected by the light reflector to the target imaging camera is parallel to the optical axis of the lens of the target imaging camera.

In addition, the present invention also provides a computer program having executable program code, and when the program code is run on a processor, the method described above is performed.

The beneficial effects brought by the technical solution provided by the present invention are as follows:
a. By means of automatic switching of dual cameras, both high-quality bright field imaging and fluorescence imaging functions can be offered;
b. The moving platform decelerates when moving to the nearest end point, making the switching process smooth, so that the optical imaging is always clear.

### Short Description of the Figures

In order to more clearly illustrate the technical solutions in the embodiments of the present application or the conventional technical solutions, the drawings required for use in the description of the embodiments or the conventional technical solutions will be briefly introduced below. Obviously, the drawings described below are only some embodiments recorded in the present application. For ordinary technicians in this field, other drawings can be obtained based on these drawings without the need for any creative work.
Figure 1 is a schematic diagram of a three-dimensional structure of a dual camera switching device for a microscope provided by an exemplary embodiment of the present invention at a first viewing angle.
Figure 2 is a schematic diagram of a three-dimensional structure of a dual camera switching device for a microscope provided by an exemplary embodiment of the present invention at a second viewing angle;
Figure 3 is a schematic diagram of a light path for when the dual camera switching device provided by an exemplary embodiment of the present invention is located in a first position;
Figure 4 is a schematic diagram of a light path for when the dual camera switching device provided by an exemplary embodiment of the present invention is located in a second position;
Figure 5 is a schematic diagram of a three-dimensional structure of the abreast first camera and second camera of the dual camera switching device for a microscope provided by an exemplary embodiment of the present invention;
Figure 6 is a schematic diagram of the switching light path for the dual camera switching device provided by an exemplary embodiment of the present invention;
Figure 7 is a schematic diagram of a three-dimensional structure of a dual camera switching device including a light reflector for a microscope provided by an exemplary embodiment of the present invention;
Figure 8 is a schematic diagram of a three-dimensional structure of the adjustment parts provided by an exemplary embodiment of the present invention;
Figure 9 is a drawing of the switching method process for the dual camera switching device provided by an exemplary embodiment of the present invention;
Figure 10 is a schematic diagram of a system for executing the method described in an embodiment of the present invention.

Wherein, the figure markings include: 100-mounting plate, 110-supporting platform, 112-linear slide rail, 210-first camera, 220-second camera, 310-moving platform, 320-driving mechanism, 330-screw rod, 340-nut, 350-connecting member, 41-first light reflector, 412-first mounting portion, 414-first light reflector mirror, 42-second light reflector, 422-second mounting portion, 424-second light reflector mirror, 43-light reflector, 510-adjustment parts, 511-adjustment bolts, 512-spring, 520-first positioning piece, 530-second positioning piece, 600-position detection device, 1000-system, 1100-microscope, 1200-computer system.

### Detailed Description

In order to enable those skilled in the art to better understand the present invention, the technical solutions in the embodiments of the present invention will be clearly and completely described below in conjunction with the drawings in the embodiments of the present invention. Obviously, the described embodiments are only part of the embodiments of the present invention, rather than all of the embodiments. Based on the embodiments of the present invention, all other embodiments obtained by ordinary technicians in this field without making any creative work should fall within the scope of protection of the present invention.

It should be noted that the terms "first", "second", etc. in the specification and claims of the present invention and the above-mentioned drawings are used to distinguish similar objects, and are not necessarily used to describe a specific order or sequence. It is to be understood that the terms so used are interchangeable under appropriate circumstances such that the embodiments of the invention described herein are capable of being practiced in sequences other than those illustrated or described herein. In addition, the terms "comprise" and "have" and any variations thereof are intended to cover non-exclusive inclusions. For example, a process, method, apparatus, product or equipment that comprises a series of steps or units is not necessarily limited to those steps or units explicitly listed, but may include other steps or units not explicitly listed or inherent to such process, method, product or equipment.

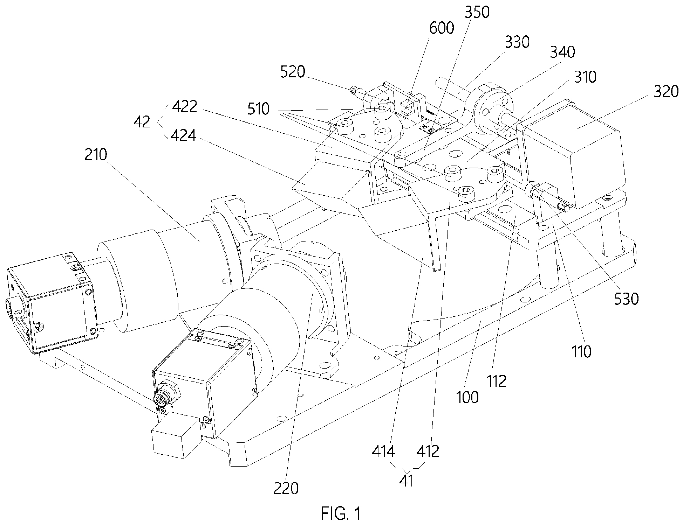

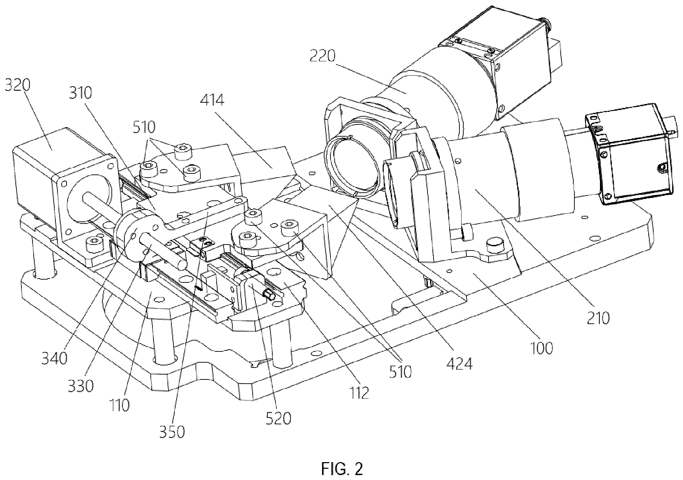

In one embodiment of the present invention, with reference to Figure 1 and Figure 2, a dual camera switching device for a microscope is provided, comprising a mounting plate 100, a camera module, a moving module and an optical path switching module, the moving module is disposed on the mounting plate 100; wherein, the camera module comprises a first camera 210 and a second camera 220 disposed on the mounting plate 100, the first camera 210 and the second camera 220 are cameras of different types, and in this embodiment, the first camera 210 is a color camera and the second camera 220 is a monochrome camera by way of example; the moving module comprises a moving platform 310 and a driving mechanism 320 configured to drive the moving platform 310; the optical path switching module is disposed on the moving platform 310, the optical path switching module comprises a light reflecting portion, and the reflecting surface of the light reflecting part faces the incident direction of the incident light; the driving mechanism 320 is configured to drive the moving platform 310 to move to a first position or a second position, wherein, the light reflecting portion of the optical path switching module is configured to reflect the input light to the lens of the first camera 210 at the first position, and is configured to reflect the input light to the lens of the second camera 220 at the second position; a light through hole is provided on the mounting plate 100 in an area opposite to the light reflecting part of the optical path switching module, in the orientation state shown in Figure 1, the incident light passes through the light through hole from below the mounting plate 100 and then irradiates upward.

In this embodiment, the mounting plate 100 further comprises a supporting platform 110, and the supporting platform 110 is arranged on the mounting plate 100 by a plurality of supporting columns or supporting blocks or in other ways, so that it has a certain height relative to the surface of other areas of the mounting plate 100, and the moving platform 310 is arranged on the supporting platform 110, and the light reflecting portion of the optical path switching module is suspended on the side of the supporting platform 110 close to the camera module, so that the height of the light reflecting portion is approximately the same as the lens height of the first camera 210 and the second camera 220.

The light reflecting portion of the optical path switching module in this embodiment comprises a first light reflector 41 and a second light reflector 42, the optical path switching module is configured to align the first light reflector 41 with the first camera 210 and to align the second light reflector 42 with the second camera 220, specifically to align the optical axis of the first light reflector 41 with the optical axis of the first camera 210 at a first position, and to align the optical axis of the second light reflector 42 with the optical axis of the second camera 220 at a second position; wherein, the optical axis of the first light reflector 41 is defined as the central axis of the light beam reflected by the first light reflector 41, and the optical axis of the first camera 210 is defined as the normal (orthogonal axis) within the detection (imaging) area of the first camera 210; wherein, the optical axis of the second light reflector 42 is defined as the central axis of the light beam reflected by the second light reflector 42, and the optical axis of the second camera 220 is defined as the normal (orthogonal axis) within the detection (imaging) area of the second camera 220.

In one embodiment, as shown in Figure 1, the first light reflector 41 and the second light reflector 42 are in an inverted v shape, that is, the reflection surface of the first light reflector 41 and the reflection surface of the second light reflector 42 form an angle; similarly, the first camera 210 and the second camera 220 are in a v shape, the lens of the first camera 210 and the lens of the second camera 220 form an angle, and the first camera 210 and the second camera 220 are relatively fixed to the mounting plate 100 . The driving mechanism 320 is configured to drive the moving platform 310 to move, a specific embodiment is as follows: the driving mechanism 320 is connected to the moving platform 310 via a connecting member 350, wherein, the driving mechanism 320 can be a motor, a cylinder, or a hydraulic cylinder, the driving mechanism 320 drives the rotation of the screw rod 330 connected thereto, and a nut 340 is sleeved on the screw rod 330, one end of the connecting member 350 is fixedly connected to the nut 340, and the other end extends outward along the radial direction of the nut 340. The screw rod 330/nut 340 converts rotational motion into linear motion. The nut 340 transmits force to the moving platform 310 via the connecting member 350, so that the moving platform 310 drives the first light reflector 41 and the second light reflector 42 to operate in a reciprocating fashion between the first positioning member 520 and the second positioning member 530. The extension length of the connecting member 350 on the surface of the moving platform 310 is greater than one third or one half of the width of the moving platform 310, so as to improve the reliability and service life of the connection made between the connecting member 350 and the moving platform 310, causing the movement of the moving platform 310 to be more stable.

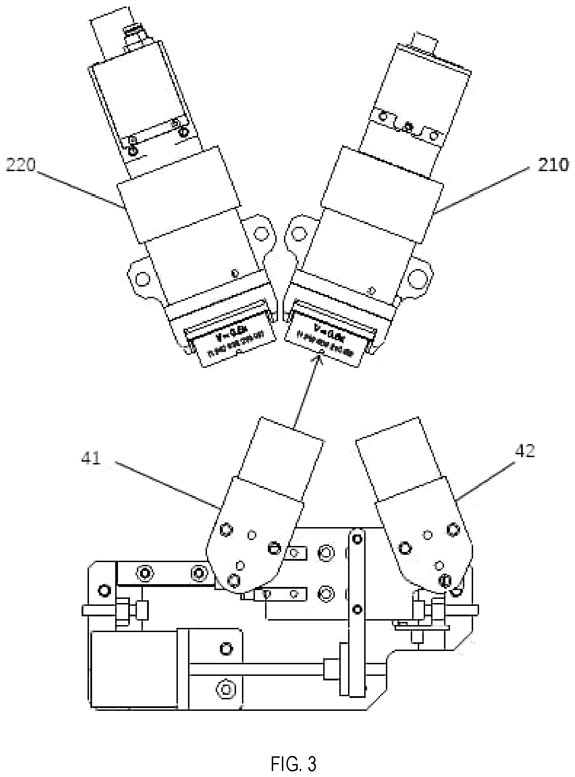

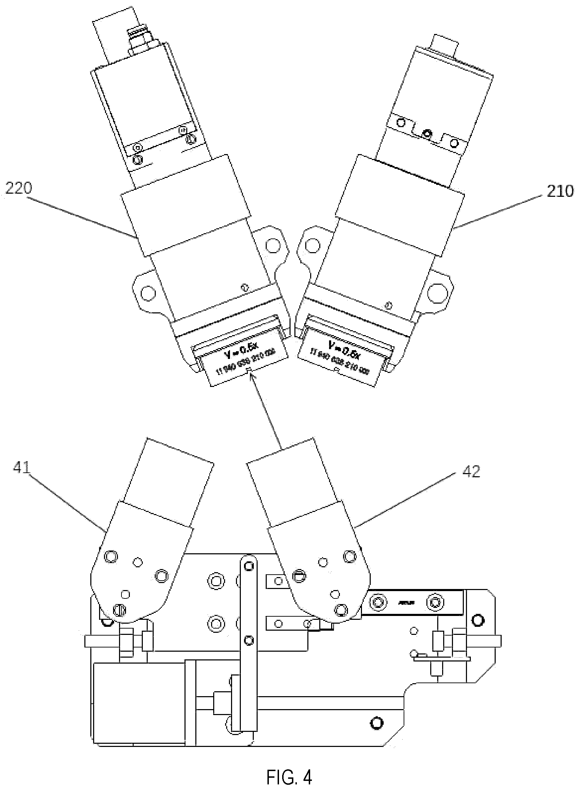

Specifically, a linear slide rail 112 that slides in cooperation with the moving platform 310 is fixedly installed on the supporting platform 110, and the extension direction of the linear slide rail 112 is approximately perpendicular to the center line direction of the angle between the first camera 210 and the second camera 220. The first light reflector 41 and the second light reflector 42 are fixed on the moving platform 310 at one end away from the reflection surface. A specific embodiment is shown in Figure 1. The first light reflector 41 comprises a first mounting portion 412 and a first light reflector mirror 414. The second light reflector 42 comprises a second mounting portion 422 and a second light reflector mirror 424. The first mounting portion 412 and the second mounting portion 422 are arranged on the moving platform 310. The first light reflector mirror 414 and the second light reflector mirror 424 are suspended on the side of the supporting platform 110 close to the camera module. Driven by the driving mechanism 320, the connecting member 350 drives the moving platform 310 to move to the first position, so that the reflecting surface of the first light reflector 41 is opposite to the lens of the first camera 210. Refer to Figure 3, at this time, the first light reflector 41 reflects the input light to the lens of the first camera 210, so as to bring about brightfield imaging photography; driven by the driving mechanism 320, the connecting member 350 drives the moving platform 310 to move to the second position, so that the reflecting surface of the second light reflector 42 is opposite to the lens of the second camera 220. Refer to Figure 4, at this time, the second light reflector 42 reflects the input light that is input to the lens of the second camera 220 to bring about fluorescent imaging photography. One of the first light reflector 41 and the second light reflector 42 is accurately switched to the working position, and can accurately reflect the light emitted from the upper light path so it can be received by its corresponding camera; The reflector is switched again, and the other reflector is switched to the working position, and can accurately reflect the light emitted from the upper light path so it can be received by its corresponding camera. Repeat this process, and the required brightfield imaging function or fluorescence imaging function can be achieved at any time. The present invention is not limited to the following settings in this embodiment: The first camera 210 is a color camera, and the second camera 220 is a monochrome camera. When brightfield imaging is required, the first light reflector 41 is switched to reflect the incident light to the first camera 210 for brightfield imaging. When fluorescence imaging is required, the second light reflector 42 is switched to reflect the incident light to the second camera 220 for fluorescence imaging. The switching process is automatically implemented via instructions pre-stored or set in the control system. For example, a switching instruction is pre-stored in the host computer, and the dual camera switching device can be switched to the required imaging function by calling the instruction. In addition to the above-mentioned camera setting embodiments, on the basis of light wave classification, the first camera 210 may be set as an infrared camera and the second camera 220 may be set as a non-infrared camera. The present invention does not limit the specific classification types of different categories of cameras. In addition, under the premise of being able to achieve the purpose of moving the moving platform 310 between the first position and the second position, the present invention does not limit the moving platform 310 to perform linear reciprocating motion along the linear guide rail 112, and an arc motion mode may also be set.

As shown in Figure 1, the first position is defined as the position reached by the left end of the moving platform 310 when the first light reflector 41 is arranged relative to the first camera 210, and the second position is defined as the position reached by the right end of the moving platform 310 when the second light reflector 42 is arranged relative to the second camera 220; the mounting plate 100 is also provided with a first positioning member 520 located at the first position and a second positioning member 530 located at the second position, the first positioning member 520 includes a first positioning block and a first bolt arranged on the first positioning block, and the second positioning member 530 includes a second positioning block and a second bolt arranged on the second positioning block; the end faces of the first bolt and the second bolt are arranged opposite to each other, and the end face of the first bolt defines the first position, and the end face of the second bolt defines the second position. The moving platform 310 is limited to move between the right end surface of the first bolt and the left end surface of the second bolt.

The first bolt and the second bolt are used to fix the first position and the second position of the product before functional debugging and departing the factory. After the first position and the second position are determined, the first bolt and the second bolt are prevented from loosening by means of glue fixation or anti-loosening nuts. The process of fixing the first position and the second position is as follows: taking the driving mechanism 320 as a stepper motor or a servo motor by way of example, the motor drive controller is configured to send variable frequency pulses to the motor, and according to the product design parameters of the switching device, in advance, the value of the distance between the first position and the second position is converted into an equivalent number of pulses to trigger the motor. For example, if the design parameters are that the distance between the first position and the second position is equal to 5 cm, and the stepping distance of the motor is 10 µm, then the number of pulses is predetermined to be 5000; then, the first position is determined, then the right end surface of the first bolt is adjusted to the first position, and then the motor is controlled to work until the left side of the moving platform 310 is against the right end surface of the first bolt; then a predetermined number of pulses is sent to the motor, and after the motor driving process is completed, the left end surface of the second bolt is adjusted to a position against the right end of the moving platform 310 at that time. Before performing the anti-loosening operation, it is possible to adapt again, for example, send 10-50 more pulses to ensure that the right end of the current moving platform 310 is against the left end surface of the second bolt, and then send a predetermined number of pulses to the motor and drive it to rotate in the opposite direction to determine whether there is a short collision sound between the moving platform 310 and the first bolt at the end of the driving process; and test whether the imaging functions of the first camera 210 and the second camera 220 can be realized at the current first position and second position; if both tests are passed, the anti-loosening operation can be performed on the first bolt and the second bolt.

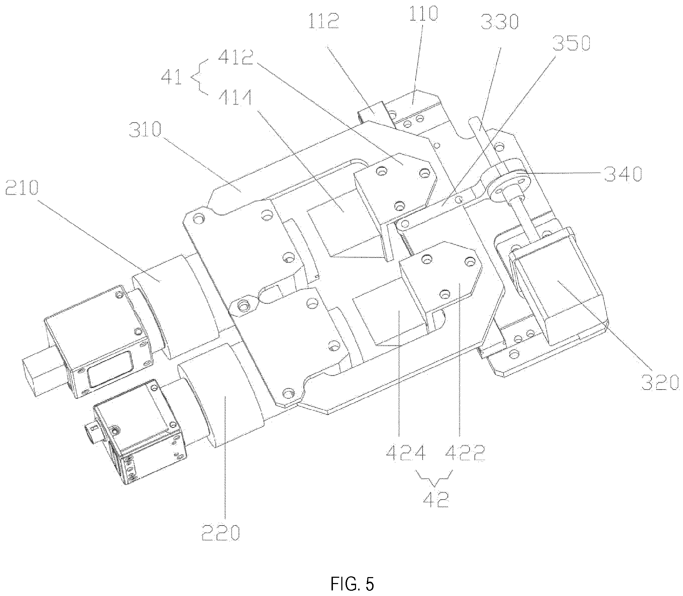

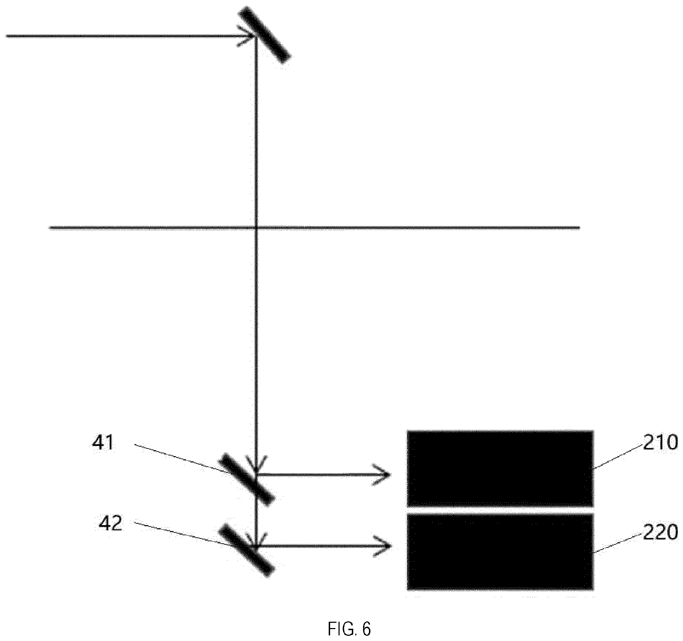

In another embodiment of the present invention, unlike the above embodiment in which the reflecting surfaces of the first light reflector 41 and the second light reflector 42 are arranged at an angle, in addition, unlike the above embodiment in which the first camera 210 and the second camera 220 are fixed to the mounting plate 100, referring to Figure 5, the first light reflector 41 and the second light reflector 42 are arranged abreast, and correspondingly, the first camera 210 and the second camera 220 are also arranged abreast. In this embodiment, the first camera 210 and the second camera 220 are fixedly mounted on the moving platform 310, the first light reflector 41 is arranged opposite to the first camera 210 and is synchronously driven by the driving mechanism 320; the second light reflector 42 is arranged opposite the second camera 220 and is synchronously driven by the driving mechanism 320. Refer to Figure 6, a schematic diagram of the switching optical path of the dual camera switching device. During the shooting process, the driving mechanism 320 drives the first light reflector 41 to transfer synchronously with the first camera 210 until the moving platform 310 reaches the first position, and the first light reflector 41 reflects the incident light beam to the first camera 210 for shooting; when the second camera 220 needs to be used for shooting, the driving mechanism 320 synchronously drives the second light reflector 42 to move with the second camera 220 until the moving platform 310 reaches the second position, and the second light reflector 42 reflects the incident light to the second camera 220 for shooting.

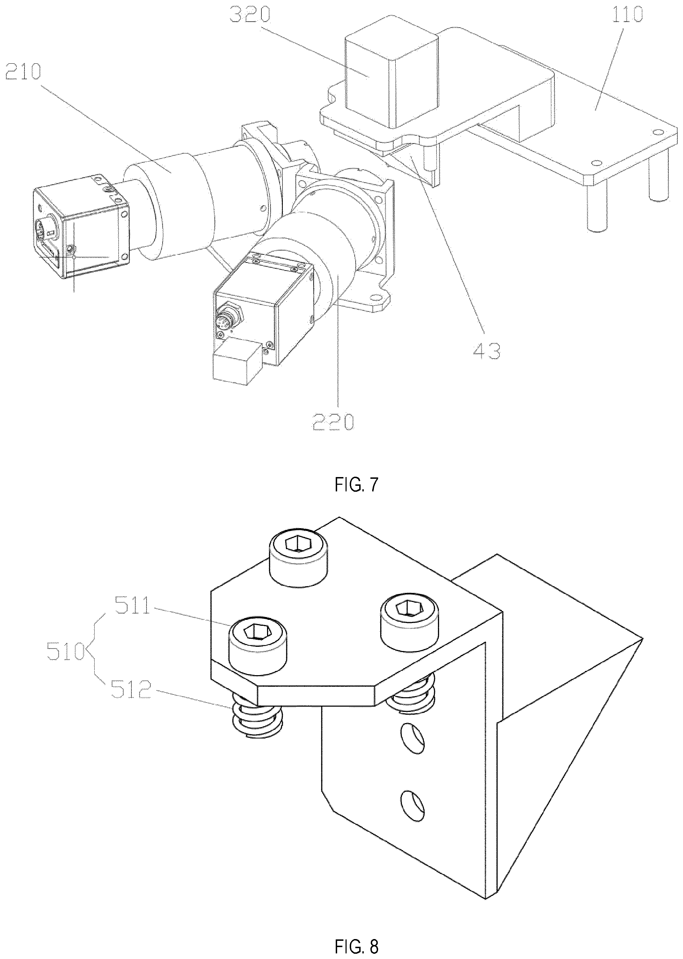

In another embodiment of the present invention, different from the above-mentioned embodiment in which the light reflecting portion of the optical path switching module includes two light reflecting portions, with reference to Figure 7 , the light reflecting portion of the optical path switching module includes a light reflector 43, and the driving mechanism 320 is configured to drive the moving platform 310 to rotate around a fixed axis to drive the light reflector 43 to rotate relative to the mounting plate 100. When brightfield imaging is required, the driving mechanism 320 drives the moving platform 310 to rotate to the first position. At this time the light reflector 43 reflects the incident light to the first camera 210, switching to color camera brightfield shooting; when fluorescence imaging is required, the driving mechanism 320 drives the mobile platform 310 to rotate to the second position. At this time, the light reflector 43 reflects the incident light to the second camera 220, switching to black and white camera fluorescence imaging.

In another embodiment of the present invention, the driving mechanism 320 comprises a motor and a drive controller, and the switching device further comprises a position detection device 600 (such as a Hall sensor) electrically connected to the drive controller, The number of moving platforms 310 may be one, and is configured to detect a signal indicating that it slides to be close to the first position or the second position, and to send the detected signal to the driving controller. For example, the position detection device 600 is disposed in an area close to the first position as shown in Figure 1. The drive controller controls the motor on the basis of the signal detected by the position detection device 600, so that the motor drives the moving platform 310 to reach an initialization position. The specific process is as follows:
When activating the system, since the current position of the moving platform 310 is unknown, for example, the moving platform 310 may deviate from the preset starting position during a transportation process after the last shutdown. Therefore, each time the system is started, the position detection device 600 is used to detect whether there is a signal from the moving platform 310. If not, the drive controller controls the motor to drive the moving platform 310 to move to the first position, until the position detection device 600 detects the signal of the moving platform 310, and then controls the motor to continue to drive the moving platform 310 to move a preset distance to the first position. For example, the position detection device 600 is at a distance from the first position in the moving direction of the moving platform 310 of 0.5 cm, and the stepping distance of the motor is 10 µm, then the number of continued steps is set to 500 in advance, or the number of redundant continued steps is set to 530, for example, to ensure that the initialized moving platform 310 is pressed against the first position defined by the right end surface of the first bolt; especially in the event of a power failure or other fault, when the moving platform 310 is turned on again, it is possible that it is located at any position between the first position and the second position, so the setting of the position detection device 600 is very important for setting the number of continued steps to the left in the initialization settings.

In this embodiment, when the moving platform 310 approaches a preset range from the first position or the second position, the frequency of the pulses sent by the drive controller to the motor is reduced, so that the moving platform 310 slows down when reaching either of the two working positions, reducing the collision force and mechanical noise when the end point is reached. Taking the above-mentioned predetermined number of pulses of 5000 as an example, the frequency of the first 4900 pulses is set to 50 Hz, and the frequency of the last 100 pulses is set to 20 Hz. As a result, the speed of the dual camera switching process can be controlled and reach the end point smoothly and steadily. This embodiment is applicable to any of the structures of the above-mentioned light reflection portions of the optical path switching module.

The present invention does not limit the switching device to have a first positioning member 520 and a second positioning member 530. For example, when a servo motor is used with an absolute encoder, since the driving controller knows the current position of the moving platform 310 at all times, there is no need to use a positioning member to initialize the positioning or prevent the moving platform 310 from crossing the end point, so the setting of the positioning member can be omitted.

In another embodiment of the present invention, unlike the stepper motor or servo motor used in the above embodiment, the motor used in this embodiment is a DC motor, and the camera switching device further comprises two sensors, specifically, a proximity sensor or a reflective slot photoelectric sensor can be used, respectively close to the first position and the second position, being configured to detect signals from the moving platform 310 sliding close to the first position or the second position, and sending the detected signals to the drive controller; the drive controller triggers the DC motor to decelerate when the moving platform 310 approaches the first position or the second position on the basis of the signals detected by the sensors. This embodiment is applicable to any of the structures of the above-mentioned light reflection portions of the optical path switching module.

In one embodiment of the present invention, an optical path calibration function is added. Referring to Figure 1 or 2, each light reflector is mounted on the moving platform 310 via three or more adjustment parts 510. Specifically, the adjustment parts 510 are disposed on the first mounting portion 412 of the first light reflector 41 and the second mounting portion 422 of the second light reflector 42. The adjustment parts 510 cooperate with each other to enable the light reflector to be adjusted with up to six degrees of freedom relative to the input light, so that the light reflected to the corresponding camera is coaxial with the camera lens receiving port. When the light reflected to the corresponding camera is coaxial with the camera, the best shooting effect is obtained. For example, the orientation calibration scheme of the light reflector can be determined according to the inclination of the light reflected to the camera relative to the optical axis of the camera lens. For example, there are three adjustment parts 510 respectively located at points A, B, and C. When the orientation calibration program aims to lower the height of point A and increase the height of point B, the adjustment part 510 at point A is adjusted upward, and the adjustment part 510 at point B is adjusted downward.

Refer to Figure 8, showing a schematic diagram of a three-dimensional structure of the adjustment part 510 provided in an exemplary embodiment of the present invention; each of the adjusting parts 510 includes an adjustment bolt 511 and a spring 512. By setting the three adjustment parts 510 on a light reflector, the movement of the light reflector in the x/y/z axis direction and the rotation around the x/y/z axis can be achieved, that is, the orientation adjustment within six degrees of freedom can be achieved, allowing calibration of the optical path, so that the light ray reflected by the reflector is parallel to or even coincides with the optical axis of the lens of the corresponding camera. The present invention does not limit the specific structure of the adjusting parts 510. For example, in addition to the structure of this embodiment, the adjusting parts 510 may also be screw assemblies arranged opposite each other in the up and down direction. The optical path calibration device described in this embodiment is applicable to any of the above embodiments.

An embodiment of the present invention further provides a microscope, including the dual camera switching device, that can achieve brightfield and fluorescence imaging in a single microscope at a low cost and in a stable fashion.

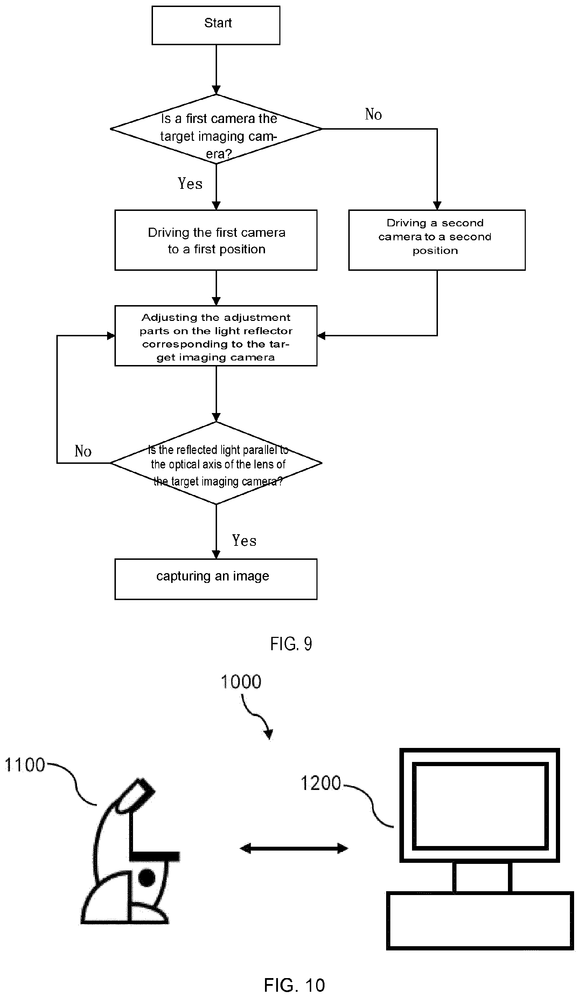

An embodiment of the present invention further provides a switching method of the dual camera switching device. Refer to Figure 9, it shows a flow chart of the switching method of the dual camera switching device provided by an exemplary embodiment of the present invention, comprising the following steps:
Determine one of the first camera and the second camera as the target imaging camera, for example by inputting an instruction to the computer system through an input device to designate the first camera or the second camera as the target imaging camera;
If the first camera is the target imaging camera, drive the moving platform of the device to a first position. At this time, the light reflector can reflect the input light into the field of view of the lens of the first camera;
If the second camera is the target imaging camera, drive the moving platform of the device to a second position. At this time, the light reflector is capable of reflecting the input light into the field of view of the lens of the second camera;
Adjust the adjustment parts on the light reflector corresponding to the target imaging camera until the light reflected by the light reflector to the target imaging camera is parallel to the optical axis of the lens of the target imaging camera;
Trigger the target imaging camera to capture images.

In an embodiment of the present invention, a computer program product is also provided, having an executable program code. When the program code is run on a computer device such as a processor, the switching method of the dual camera switching device as described above is performed.

In one embodiment of the present invention, an electronic device is provided, including a processor and a memory, wherein, the memory is used to store program instructions, and the processor is configured to run the program instructions, and the program instructions are run to perform the steps performed in the above embodiments.

In one embodiment of the present invention, a computer-readable storage medium is provided for storing program instructions, the program instructions are configured to be called to execute the steps performed in the above embodiments.

Some embodiments relate to a microscope including a switching method applied to a dual camera switching device. Optionally, the microscope may be part of or connected to a system performing the method in Figure 9. Figure 10 shows a schematic diagram of a system 1000 configured to perform the methods described in the present invention. System 1000 comprises a microscope 1100 and computer system 1200. Microscope 1100 is configured to capture images and is connected to computer system 1200 . The computer system 1200 is configured to perform at least a portion of the methods described in the present invention. The computer system 1200 and the microscope 1100 may be separate entities, but may also be integrated into a common housing. The computer system 1200 may be part of a central processing system of the microscope 1100 and/or the computer system 1200 may be part of a subcomponent of the microscope 1100, such as a sensor, an actuator, a camera or an illumination unit of the microscope 1100.

Computer system 1200 can be a local computer device having one or more processors and one or more storage devices (for example, a personal computer, laptop, tablet computer, or mobile phone), or it can be a distributed computer system (for example, having one or more processors and one or more storage devices distributed at various locations, such as a local client and/or one or more remote server sites and/or data centers). Computer system 1200 may include any circuit or combination of circuits. In one embodiment, the computer system 1200 may include one or more processors of any type. As used herein, a processor may refer to any type of computing circuit, such as, but not limited to, a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), a multi-core processor, a field programmable gate array (FPGA) such as a microscope or a microscope component (e.g., a camera), or any other type of processor or processing circuit. Other types of circuits that may be included in computer system 1200 may be custom circuits, application specific integrated circuits (ASICs), and the like. For example, one or more circuits (for example, communications circuits) used in wireless devices such as mobile phones, tablet computers, laptop computers, two-way radios, and similar electronic systems. Computer system 1200 may include one or more storage device, that may include one or more storage elements suitable for a particular application, such as main memory in the form of random access memory (RAM), one or more hard disk drives, and/or one or more drives for handling removable media such as compact disks (CDs), flash memory cards, or digital video disks (DVDs). Computer system 1200 may further include a display device, one or more speakers, and a keyboard and/or controller, which may include a mouse, trackball, touch screen, voice recognition device, or any other device that allows a system user to input information to the computer system 1200 or receive information from the computer system 1200.

Some or all of the steps of the method may be performed by (or using) a hardware device (for example, a processor, a microprocessor, a programmable computer, or an electronic circuit). In some embodiments, such device may perform one or more of the most important steps of the method.

For certain implementation requirements, embodiments of the present invention may be embodied in hardware or in software. This embodiment may be performed using a non-transitory storage medium (for example, a digital storage medium, such as a floppy disk, DVD, Blu-ray, CD, ROM, PROM, EPROM, EEPROM or FLASH) having electronically readable control signals stored thereon. These electronically readable control signals cooperate (or are capable of cooperating) with a programmable computer system so that the corresponding method is implemented. Therefore, the digital storage medium may be computer readable.

Some embodiments of the present invention comprise a data carrier having electronically readable control signals. These electronically readable control signals are capable of cooperating with a programmable computer system, so that one of the methods described in the present invention is implemented.

Generally, embodiments of the present invention can be implemented as a computer program product with a program code. When the computer program product runs on a computer, the program code can run, so as to perform one of the methods. The program code may, for example, be stored on a machine-readable carrier.

Other embodiments comprise the computer program for performing one of the methods described herein, stored on a machine readable carrier.

In other words, an exemplary embodiment of the present invention is, therefore, a computer program, having a program code for performing, when the computer program runs on a computer, one of the methods described herein.

Thus, a further embodiment of the present invention is a storage medium (or a data carrier, or a computer-readable medium) comprising, stored thereon, a computer program. This computer program is used for performing one of the methods described herein, when the computer program is executed by a processor. The data carrier, the digital storage medium or the recorded medium are typically tangible and/or non-transitory. Yet another embodiment of the present invention is a device according to the present invention, comprising a processor and a storage medium.

Thus, a further embodiment of the present invention is a data stream or a sequence of signals representing the computer program for performing one of the methods described in the present invention. The data stream or sequence of signals may be configured, for example, to be transmitted via a data communication connection, via the Internet by way of example.

A further embodiment comprises a processing means, for example a computer or a programmable logic device, configured to or adapted to perform one of the methods described in the present invention.

A further embodiment comprises a computer. On the computer is installed the computer program for performing one of the methods described in the present invention.

A further embodiment of the present invention comprises an apparatus or a system configured to transfer (for example, electronically or optically) a computer program for performing one of the methods described in the invention, to a receiver. The receiver may be, for example, a computer, a mobile device, or a storage device. The apparatus or system may, for example, comprise a file server for transferring the computer program to the receiver.

In some embodiments, a programmable logic device (for example, a field programmable gate array) may be used to perform some or all of the functionalities of the methods described in the present invention. In some embodiments, a field programmable gate array may cooperate with a microprocessor in order to perform one of the methods described herein. Generally, the method is preferably performed by any hardware device.

It should be noted that, in this document, relational terms such as first and second, etc. are merely used to distinguish one entity or operation from another entity or operation, and do not necessarily require or imply any actual relationship or order between these entities or operations. Moreover, the terms "comprises," "comprising," or any other variations thereof are intended to cover non-exclusive inclusion, such that a process, method, article, or apparatus that comprises a list of elements comprises not only those elements but also other elements not expressly listed, or also comprises elements inherent to such process, method, article, or apparatus. Without more constraints, an element defined by the phrase "comprising a..." does not exclude the existence of other identical elements in the process, method, article or apparatus comprising the element.

As used herein, the term "and/or" comprises any and all combinations of one or more of the associated listed items and may be abbreviated as "/".

The above description is only a specific embodiment of the present invention. It should be pointed out that for ordinary technicians in this technical field, several improvements and modifications can be made without departing from the principles of this application. These improvements and modifications should also be regarded as the scope of protection of this application.

## Claims

1. A dual camera switching device for a microscope, comprising a mounting plate (100), a camera module, a moving module and an optical path switching module; wherein the camera module comprises a first camera (210) and a second camera (220) arranged on the mounting plate (100), the first camera (210) and the second camera (220) are cameras of different types;
the moving module arranged on the mounting plate (100), wherein the moving module comprises a moving platform (310) and a driving mechanism (320) configured to drive the moving platform (310);
the optical path switching module arranged on the moving platform (310), wherein the optical path switching module comprises a light reflecting portion;
the driving mechanism (320) configured to drive the moving platform (310) to move to a first position or a second position, wherein the light reflecting portion of the optical path switching module is configured to reflect input light to the first camera (210) at the first position, and is configured to reflect input light to the second camera (220) at the second position.

2. The dual camera switching device according to claim 1, wherein the light reflecting portion of the optical path switching module comprises a first light reflector (41) and a second light reflector (42);
wherein the driving mechanism (320) is configured to drive the moving platform (310) to move, so as to drive the first light reflector (41) and the second light reflector (42) to slide relative to the mounting plate (100);
wherein the first light reflector (41) is configured to reflect the input light from the first position to the first camera (210); the second light reflector (42) is configured to reflect the input light from the second position to the second camera (220).

3. The dual camera switching device according to claim 2, wherein the reflective surface of the first light reflector (41) forms an angle with the reflective surface of the second light reflector (42); the lens of the first camera (210) forms an angle with the lens of the second camera (220), and the first camera (210) and the second camera (220) are relatively fixed to the mounting plate (100); and/or,
wherein the first light reflector (41) and the second light reflector (42) are arranged abreast, and the first camera (210) and the second camera (220) are arranged abreast; the first light reflector (41) and the first camera (210) are arranged opposite to each other and are driven synchronously, and the second light reflector (42) and the second camera (220) are arranged opposite to each other and are driven synchronously.

4. The dual camera switching device according to claim 1, wherein the light reflecting portion of the optical path switching module comprises a light reflector (43);
wherein the driving mechanism (320) is configured to drive the moving platform (310) to rotate around a fixed axis, so as to drive the light reflector (43) to rotate relative to the mounting plate (100).

5. The dual camera switching device according to any one of claims 1 to 4, wherein the driving mechanism (320) is connected to the moving platform (310) via a connecting member (350), and the extension length of the connecting member (350) on the surface of the mobile platform (310) is greater than one third or one half of the width of the moving platform (310).

6. The dual camera switching device according to any one of claims 1 to 5, wherein the driving mechanism (320) comprises a motor and a drive controller, and the switching device further comprises a position detection device (600) electrically connected to the drive controller, the position detection device configured to detect a signal indicating that the moving platform (310) slides close to the first position or the second position, and to send the detected signal to the drive controller;
wherein the drive controller controls the motor according to the signal detected by the position detection device (600), so that the motor drives the moving platform (310) to reach an initialization position.

7. The dual camera switching device according to any one of claims 1 to 6, the driving mechanism (320) comprising a motor and a drive controller, wherein the motor is a stepping motor or a servo motor, and the drive controller is configured to send variable frequency pulses to the motor, wherein when the moving platform (310) approaches a preset range from the first position or the second position, the frequency of the pulses sent by the drive controller to the motor is reduced; or,
wherein the motor is a DC motor, and the switching device further comprises two sensors respectively close to the first position and the second position, being configured to detect signals from the moving platform (310) sliding close to the first position or the second position, and sending the detected signals to the drive controller; the drive controller triggering the DC motor to decelerate when the moving platform (310) approaches the first position or the second position on the basis of the signals detected by the sensors.

8. The dual camera switching device according to any one of claims 1 to 7, wherein each light reflector is installed on the moving platform (310) via three or more adjustment parts (510), and the adjustment parts (510) cooperate with each other to enable the light reflector to have a maximum of six degrees of freedom for adjustment relative to the input light, so that the light reflected to the corresponding camera is parallel to the optical axis of the lens.

9. The dual camera switching device according to any one of claims 1 to 8, the mounting plate (100) further comprising a supporting platform (110), wherein the supporting platform (110) has a certain height relative to the surface of other areas of the mounting plate (100), and the moving platform (310) is arranged on the supporting platform (110), and the light reflecting portion of the optical path switching module is suspended on the side of the supporting platform (110) close to the camera module.

10. The dual camera switching device according to any one of claims 1 to 9, wherein the mounting plate (100) is further provided with a first positioning member (520) located at the first position and a second positioning member(530) located at the second position, and the moving platform (310) is limited to move between the first positioning member (520) and the second positioning member (530).

11. The dual camera switching device according to claim 10, wherein the first positioning member (520) comprises a first positioning block and a first bolt arranged on the first positioning block, and the second positioning member (530) comprises a second positioning block and a second bolt arranged on the second positioning block;
wherein the end faces of the first bolt and the second bolt are arranged opposite to each other, and the end face of the first bolt defines the first position, and the end face of the second bolt defines the second position.

12. The dual camera switching device according to any one of claims 1 to 11, wherein a light through hole is provided on the mounting plate (100) in an area corresponding to the light reflecting portion of the optical path switching module;
wherein the reflecting surfaces of the light reflecting parts all face the light through hole.

13. The dual camera switching device according to any one of claims 1 to 12, wherein first camera (210) is a color camera, and second camera (220) is a monochrome camera.

14. A microscope system, comprising the microscope and a dual camera switching device as claimed in any one of claims 1 to 13.

15. A switching method based on the dual camera switching device according to any one of claims 1 to 13, comprising the following steps:
determining one of the first camera or the second camera as a target imaging camera;
driving the moving platform to the first position or second position according to the determined target imaging camera;
adjusting the adjustment part on the light reflector of the device until the light reflected by the light reflector to the target imaging camera is parallel to the optical axis of the lens of the target imaging camera.

16. A computer program comprising an executable program code configured to perform the method according to claim 15, when the computer program is run on a processor.
